# FASCICULE DE BREVET EUROPEEN

(11) **EP 2 491 502 B1**
(45) Date de publication et mention de la délivrance du brevet: **16.01.2019**
(21) Numéro de dépôt: 10773885.8
(22) Date de dépôt: 20.10.2010
(51) Int. Cl.: G06F 17/30, G06Q 30/00

(54) **GESTION D'ETIQUETTES RELATIVES A DES OBJETS MULTIMEDIAS PARTAGES DANS UN RESEAU DE TELECOMMUNICATIONS**
VERWALTUNG VON ETIKETTEN IM ZUSAMMENHANG MIT GEMEINSAMEN MULTIMEDIAOBJEKTEN IN EINEM TELEKOMMUNIKATIONSNETZ
MANAGEMENT OF TAGS RELATED TO SHARED MULTIMEDIA OBJECTS IN A TELECOMMUNICATION NETWORK

(30) Priorité: 23.10.2009 FR 0957449
(43) Date de publication de la demande: 29.08.2012
(73) Titulaire: Alcatel Lucent, 91620 Nozay (FR)
(72) Inventeur: HACID, Hakim, F-91620 Nozay (FR); STAN, Johann, F-42100 Saint-Etienne (FR)
(74) Mandataire: Nokia EPO representatives
(86) Numéro de dépôt international: PCT/EP2010/065824
(87) Numéro de publication internationale: WO 2011/048157

(56) Documents cités:
- EP-A2- 1 132 847
- LAJMI S ET AL: "Extended Social Tags: Identity Tags Meet Social Networks", COMPUTATIONAL SCIENCE AND ENGINEERING, 2009. CSE '09. INTERNATIONAL CONFERENCE ON, IEEE, PISCATAWAY, NJ, USA, 29 août 2009 (2009-08-29), pages 181-187, XP031544671, ISBN: 978-1-4244-5334-4
- B. carminati et al: "A semantic web based framework for social network access control", SACMAT '09, 3 juin 2009 (2009-06-03), pages 177-186, XP002586238, Stresa, Italy Extrait de l'Internet: URL:http://www.utdallas.edu/~xyt061000/pap er-for-website/%5B27%5Dp177-carminati.pdf [extrait le 2010-06-07]
- A. Felt and D. Evans: "Privacy protection for social networking platforms", Workshop on Web 2.0 Security and Privacy, 22 mai 2008 (2008-05-22), pages 1-8, XP002586239, Oakland, CA, USA Extrait de l'Internet: URL:http://citeseerx.ist.psu.edu/viewdoc/d ownload?doi=10.1.1.143.5642&rep=rep1&type= pdf [extrait le 2010-06-08]
- KEN BARKER ET AL: "A Data Privacy Taxonomy", 7 juillet 2009 (2009-07-07), DATASPACE: THE FINAL FRONTIER, SPRINGER BERLIN HEIDELBERG, BERLIN, HEIDELBERG, PAGE(S) 42 - 54, XP019123661, ISBN: 9783642028427 page 44, ligne 17 - ligne 26 page 46, ligne 38 - page 48, ligne 9

## Description

La présente invention concerne une gestion d'informations d'étiquettes relatives à des objets multimédias partagés dans un réseau de télécommunications, par exemple au moyen d'un réseau social.

Actuellement, il existe des environnements de type réseau social dans lesquels des utilisateurs peuvent partager différents types d'objets multimédias, tels que des textes, des images et des vidéos. Ce type d'environnement repose essentiellement sur les trois notions suivantes : un utilisateur, un objet multimédia à partager, et un ensemble d'étiquettes décrivant l'objet multimédia. Un aspect important du partage d'objets multimédias est la confidentialité des informations dans l'ensemble d'étiquettes accessibles par les utilisateurs.

Le partage d'objets multimédias a lieu généralement entre des utilisateurs ayant une relation sociale donnée. Un utilisateur peut souhaiter rendre accessibles certaines informations dans l'ensemble d'étiquettes à un autre utilisateur donné selon la relation sociale entre les utilisateurs.

Dans des sites web de réseau social, une stratégie de confidentialité est implémentée par rapport à différents contenus numériques, tels qu'une adresse ou un numéro de téléphone et permet de définir un niveau de confidentialité pour chacun de ces contenus par rapport à un ou plusieurs utilisateurs, le contenu étant visible ou non visible pour un utilisateur donné.

Il n'existe pas de moyens pour un utilisateur de partager un objet multimédia auquel est associé un ensemble d'étiquettes tout en contrôlant quelles informations contenues dans l'ensemble d'étiquettes seront accessibles par les autres utilisateurs.

Le document intitulé "Extended Social Tags: Identity Tags meet Social networks" de S. Lajmi et al paru à la CSE '09 International Conférence, pages 181-187 décrit la création dynamique d'étiquettes mais n'aborde pas les problèmes de confidentialité d'étiquettes.

Le document brevet EP 1 132 847 décrit un mécanisme statique de droits d'accès à des étiquettes utilisateur.

Un objectif de l'invention est de remédier aux inconvénients précédents en offrant à l'utilisateur la possibilité de rendre accessibles à d'autres utilisateurs des informations d'étiquettes qui sont associées à un objet multimédia et qui sont respectivement différentes selon les autres utilisateurs consultant ces informations.

Pour atteindre cet objectif, un procédé selon l'invention pour gérer au moins une étiquette d'utilisateur qui est associée à un objet multimédia détenu par un utilisateur et mémorisé dans un serveur d'application, l'étiquette d'utilisateur étant susceptible d'être accédée par au moins un autre utilisateur à travers un réseau de télécommunications, comprend les étapes suivantes dans le serveur d'application :
analyser sémantiquement l'étiquette d'utilisateur pour déterminer un ensemble structuré d'étiquettes de confidentialité,
lorsqu'un autre utilisateur accède à l'étiquette d'utilisateur, déterminer la catégorie sociale de l'autre utilisateur par rapport à l'utilisateur, et sélectionner une étiquette de confidentialité dans l'ensemble structuré relatif à l'étiquette d'utilisateur en fonction de la catégorie sociale déterminée,
transmettre l'étiquette de confidentialité sélectionnée à l'autre utilisateur.

Avantageusement, l'invention apporte une granularité dans la confidentialité et l'accès d'informations contenues dans des ensembles d'étiquettes. L'utilisateur peut garder ses habitudes pour mettre en partage des objets multimédias et renseigner des ensembles d'étiquettes associées à ces objets multimédias, tout en s'assurant que différentes informations relatives aux étiquettes, ayant des caractères confidentiels différents, seront accessibles par des utilisateurs accédant à ces étiquettes.

Selon une autre caractéristique de l'invention, l'ensemble structuré d'étiquettes de confidentialité peut être un vocabulaire structuré modélisant hiérarchiquement des relations entre les étiquettes de confidentialité.

Selon d'autres caractéristiques de l'invention, une expression comprise dans l'étiquette d'utilisateur peut être incluse dans l'ensemble structuré qui est préalablement mémorisé dans le serveur d'application. Egalement, une expression comprise dans l'étiquette d'utilisateur peut ne pas être incluse dans un ensemble structuré qui est préalablement mémorisé dans le serveur d'application et de nouvelles étiquettes de confidentialité ayant des liens hiérarchiques entre elles peuvent être générées et rattachées au vocabulaire structuré.

L'invention concerne également un serveur d'application pour gérer au moins une étiquette d'utilisateur qui est associée à un objet multimédia détenu par un utilisateur et mémorisé dans le serveur d'application, l'étiquette d'utilisateur étant susceptible d'être accédée par au moins un autre utilisateur à travers un réseau de télécommunications, le serveur d'application comprenant :
des moyens pour analyser sémantiquement l'étiquette d'utilisateur pour déterminer un ensemble structuré d'étiquettes de confidentialité,
des moyens pour déterminer, lorsqu'un autre utilisateur accède à l'étiquette d'utilisateur, la catégorie sociale de l'autre utilisateur par rapport à l'utilisateur et des moyens pour sélectionner une étiquette de confidentialité dans l'ensemble structuré relatif à l'étiquette d'utilisateur en fonction de la catégorie sociale déterminée,
des moyens pour transmettre l'étiquette de confidentialité sélectionnée à l'autre utilisateur.

L'invention se rapporte encore à un programme d'ordinateur apte à être mis en oeuvre dans un serveur, ledit programme comprenant des instructions qui, lorsque les programmes sont exécutés dans ledit serveur, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication pour gérer des étiquettes associées à des objets multimédias selon une réalisation de l'invention ; et
- la figure 2 est un algorithme d'un procédé pour gérer des étiquettes associées à des objets multimédias selon une réalisation de l'invention.

L'invention est relative à une gestion d'informations d'étiquettes relatives à des objets multimédias mémorisés dans un serveur d'application et partagés dans un réseau de télécommunications.

Dans la suite de la description, le serveur d'application offre un service de réseau social notamment pour partager des objets multimédias entre différents utilisateurs. Une étiquette ("tag" en anglais) peut être définie comme un ensemble de termes ou d'expressions, par exemple des mots-clés, qui est associé à un objet multimédia et qui fournit une explication sur l'objet multimédia.

En particulier, un utilisateur possède un objet multimédia qui est associé à un ensemble d'étiquettes dans le serveur d'application et qui peut être consulté par d'autres utilisateurs. L'utilisateur peut souhaiter mettre en partage l'objet multimédia, tel qu'une image ou une photographie, avec différentes explications selon le profil de l'utilisateur consultant l'objet multimédia.

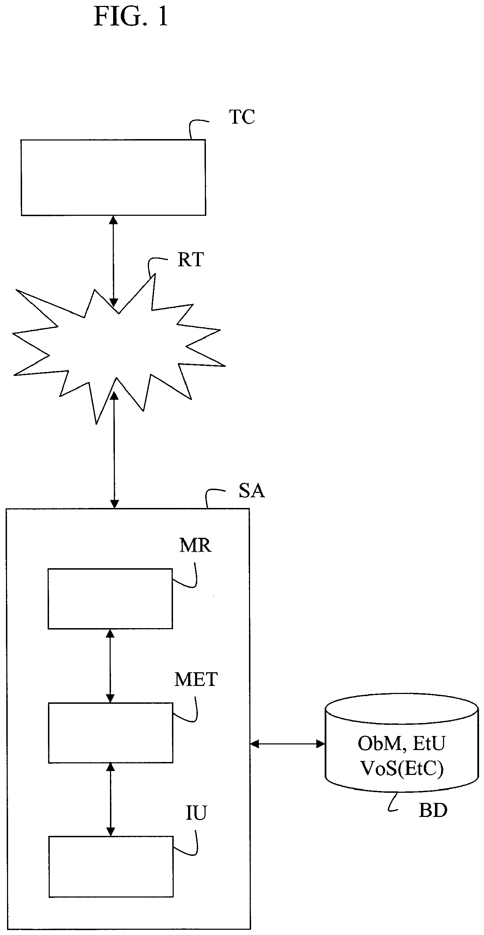

En référence à la figure 1, un système de communication selon l'invention comprend un serveur d'application SA et au moins un terminal de communication TC, aptes à communiquer entre eux via un réseau de télécommunications RT.

Le réseau de télécommunications RT peut être un réseau filaire ou sans fil, ou une combinaison de réseaux filaires et de réseaux sans fil. Par exemple, le réseau de télécommunications RT est un réseau de paquets à haut débit de type IP ("Internet Protocol" en anglais), tel que l'internet ou un intranet.

Selon un exemple, un terminal de communication TC est un ordinateur personnel relié directement par modem à une liaison de type xDSL ("Digital Subscriber Line" en anglais) ou RNIS (Réseau Numérique à Intégration de Services) reliée au réseau de télécommunications RT.

Selon un autre exemple, un terminal de communication TC est un terminal de radiocommunications cellulaire mobile, relié par un canal de radiocommunication au réseau de télécommunications, par exemple de type GSM ("Global System for Mobile communications" en anglais) ou UMTS ("Universal Mobile Telecommunications System" en anglais).

Selon un autre exemple, un terminal de communication TC comprend un dispositif ou objet électronique de télécommunications qui peut être un assistant numérique personnel communicant PDA ("Personnal Digital Assistant" en anglais), ou un téléphone intelligent (SmartPhone), pouvant être relié à une borne d'accès d'un réseau public sans fil de faible portée du type WLAN ("Wireless Local Area Network" en anglais) ou conforme à l'une des normes 802.1x, ou de moyenne portée selon le protocole WIMAX ("World wide Interoperability Microwave Access" en anglais), relié au réseau de télécommunications.

Le serveur d'application SA comprend un module de relation MR, un module d'étiquette MET et une interface d'utilisateur IU.

Dans la suite de la description, le terme module peut désigner un dispositif, un logiciel ou une combinaison de matériel informatique et de logiciel, configuré pour exécuter au moins une tâche particulière.

Le serveur d'application SA est lié à une base de données BD qui est intégrée dans le serveur d'application SA ou incorporée dans un serveur de gestion de base de données relié au serveur d'application SA par une liaison locale ou distante.

En particulier, la base de données BD contient des objets multimédias ObM mémorisés en correspondance avec des ensembles d'étiquettes d'utilisateur EtU, et un ou plusieurs vocabulaires structurés VoS comprenant des étiquettes de confidentialité EtC relatives aux étiquettes d'utilisateur.

Le module de relation MR gère la relation sociale entre différents utilisateurs, et notamment les liens sociaux que possède un utilisateur avec d'autres utilisateurs et qui sont définis par le service de réseau social offert par le serveur d'application SA.

Dans un réseau social, les utilisateurs peuvent être modélisés sous forme de graphe représentant les relations sociales qui peuvent exister entre les utilisateurs, ces relations sociales étant définies selon un ensemble de catégories. Cet ensemble de catégories comprend par exemple : "Famille", "Amis", "Collègues", "Etrangers" ou "Nul". Chaque utilisateur a une relation sociale avec un autre utilisateur selon l'une des catégories précédentes, ou de type "Nul" lorsqu'aucune relation n'existe entre le couple d'utilisateurs, cette relation sociale étant propre à l'utilisateur et n'étant pas symétrique au sein d'un couple d'utilisateurs. D'un point de vue confidentialité, les catégories sociales définissent une hiérarchie entre les utilisateurs par rapport à un utilisateur donné, hiérarchie selon laquelle l'accès à des informations dépend de la catégorie sociale de l'utilisateur.

Une telle hiérarchie peut être établie selon l'ordre suivant "Famille", "Amis", "Collègues", "Etrangers" ou "Nul", puisqu'un utilisateur peut préférer partager des informations sur sa vie privée avec sa famille ou des amis plutôt qu'avec des collègues. Inversement, utilisateur peut préférer partager des informations sur sa vie professionnelle avec des collègues plutôt qu'avec des amis.

Le module d'étiquette MET contrôle le niveau de détails des informations, plus particulièrement la précision de la granularité de ces informations, qui sont relatives à une étiquette d'utilisateur EtU associée à un objet multimédia ObM et accessibles à des utilisateurs. L'utilisateur détient un ou plusieurs objets multimédias ObM mémorisés dans le serveur d'application SA et associe des ensembles d'étiquettes d'utilisateur EtU respectivement à des objets multimédias.

Dans une réalisation, les étiquettes de confidentialité EtC peuvent être représentées sous forme d'une ontologie, qui est un vocabulaire modélisant les relations entre les étiquettes, l'utilisateur et les objets multimédias. Une ontologie peut être définie comme un réseau sémantique regroupant un ensemble de concepts décrivant un domaine et liés entre eux par des relations taxonomiques et sémantiques.

Par exemple, un ensemble d'étiquettes {Alice, ma petite amie, fête d'anniversaire d'Alice} est plus précis que l'ensemble d'étiquettes {Alice, amie, fête}.

Chaque étiquette d'utilisateur EtU est relative à un domaine particulier et a une signification particulière. Une étiquette d'utilisateur EtU est ainsi relative à un vocabulaire structuré VoS qui positionne l'étiquette d'utilisateur EtU dans une hiérarchie d'étiquettes de confidentialité EtC pour spécifier le niveau de détails de l'étiquette d'utilisateur EtU. Un vocabulaire structuré définit un ordre dans les étiquettes de confidentialité EtC en fonction du niveau de détail sémantique.

Dans une réalisation, le module d'étiquette MET implémente une fonction ω qui modifie la forme d'une étiquette de confidentialité EtC pour lui donner une autre forme avec plus ou moins de détails, selon un paramètre de relaxation relatif au vocabulaire structuré VoS.

Le degré de granularité d'une étiquette de confidentialité EtC, contrôlé par le paramètre de relaxation, peut être spécifié par l'utilisateur selon un ensemble donné de critères qui peuvent être relatifs par exemple aux catégories de relations sociales telles "Famille" ou "Amis". Selon un exemple, un objet multimédia tel qu'une photographie est mémorisé par l'utilisateur dans le serveur d'application SA et associé à une étiquette de confidentialité EtC "Fête d'anniversaire". Cette étiquette est considérée avoir le degré de granularité le plus élevé parmi les étiquettes de confidentialité EtC suivantes correspondantes dans le vocabulaire structuré "Evènement social privé", "Evènement social" et "Evènement". L'utilisateur peut ainsi définir quatre catégories sociales comme critères pour le degré de granularité : "Famille", "Amis", "Amis d'amis" et "Etrangers". La fonction ω détermine les degrés de granularité de l'étiquette de confidentialité EtC selon la catégorie sociale de l'utilisateur consultant l'étiquette d'utilisateur EtU :
ω("Fête d'anniversaire", "Famille") = "Fête d'anniversaire"
ω("Fête d'anniversaire", "Amis") = "Evènement social privé"
ω("Fête d'anniversaire", "Amis d'amis") = "Evènement social"
ω("Fête d'anniversaire", "Etrangers") = "Evènement"

Un vocabulaire structuré Vos fournit une vue hiérarchique d'une information donnée incluse dans une étiquette d'utilisateur EtU, chaque niveau dans la hiérarchie correspondant à un niveau de granularité, c'est-à-dire un niveau de détail de l'information. A titre d'exemple est décrite ci-dessus une partie de branche du vocabulaire structuré dans l'ordre suivant {"Evènement", "Evènement social", "Evènement social privé", "Fête d'anniversaire"}, il sera entendu que le vocabulaire, sous forme d'arbre, peut contenir d'autres parties de branche telles que {"Evènement social privé", "Fête d'anniversaire", "Fête d'anniversaire de mariage"} et {"Evènement social privé", "Fête d'anniversaire", "Fête d'anniversaire de naissance"}, ou encore {"Evènement social", "Evènement social privé"} et {"Evènement social", "Evènement social public"}.

Par ailleurs, il peut être considéré que l'utilisateur renseigne une étiquette d'utilisateur EtU par des informations qui seront potentiellement accessibles de manière !a plus détaillée possible par d'autres utilisateurs. En outre, le nombre de catégories sociales peut être inférieur ou supérieur au nombre de différents niveaux de granularité relatifs à une étiquette d'utilisateur dans le vocabulaire structuré. Différentes catégories sociales peuvent aussi être associées à un même niveau de granularité, c'est-à-dire à une même étiquette de confidentialité EtC dans le vocabulaire structuré VoS vis-à-vis d'une étiquette d'utilisateur EtU.

L'interface d'utilisateur IU est une interface utilisateur graphique GUI ("Graphical User Interface" en anglais) qui permet à l'utilisateur notamment de définir de nouvelles catégories sociales avec d'autres utilisateurs et de définir des règles pour attribuer un niveau de granularité à une étiquette d'utilisateur EtU en fonction de la catégorie sociale d'un autre utilisateur susceptible de consulter l'étiquette d'utilisateur EtU.

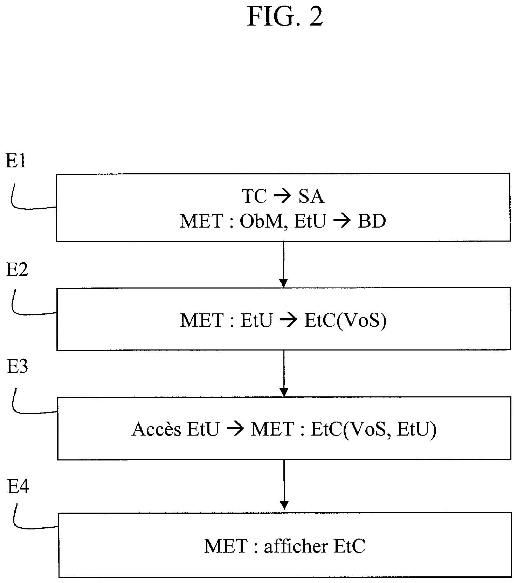

En référence à la figure 2, un procédé pour gérer des étiquettes associées à des objets multimédias selon une réalisation de l'invention comprend des étapes E1 à E4 exécutées dans le système de communication.

A l'étape E1, un utilisateur se connecte au serveur d'application SA via un terminal de communication TC. Le module d'étiquette MET invite l'utilisateur à télécharger un objet multimédia ObM et à renseigner un ensemble d'étiquettes d'utilisateur EtU, l'ensemble pouvant être réduit à une seule étiquette, associé à l'objet multimédia pour décrire ce dernier.

L'objet multimédia ObM et l'ensemble d'étiquettes d'utilisateur EtU sont mémorisés en correspondance dans la base de données BD. Par exemple, l'objet multimédia ObM et les étiquettes d'utilisateur EtU sont mémorisés en outre en correspondance avec un identificateur de l'utilisateur titulaire de l'objet multimédia ObM.

A l'étape E2, le module d'étiquette MET analyse sémantiquement chaque étiquette d'utilisateur EtU, c'est-à-dire analyse sémantiquement le contenu de l'expression ou des mots-clés inclus dans l'étiquette d'utilisateur EtU, pour déterminer un vocabulaire structuré VoS relatif à l'étiquette d'utilisateur, et en déduire une étiquette de confidentialité EtC correspondant à l'étiquette d'utilisateur EtU et une hiérarchie d'étiquettes qui contient l'étiquette déduite et qui est contenue dans le vocabulaire structuré VoS.

Dans un premier cas de figure, si l'étiquette d'utilisateur EtU comprend une expression qui est incluse dans le vocabulaire structuré VoS, le module MET identifie le vocabulaire structuré préalablement mémorisé dans la base de données BD et une étiquette de confidentialité EtC comprenant cette expression dans le vocabulaire structuré.

En variante, l'étiquette d'utilisateur EtU comprend une expression qui est proche sémantiquement du sens d'une autre expression incluse dans le vocabulaire structuré VoS, et le module MET identifie une étiquette de confidentialité EtC comprenant ladite autre expression dans le vocabulaire structuré. Par exemple, l'étiquette d'utilisateur EtU contient l'expression "Fête" qui est proche d'une autre expression "Commémoration" incluse dans le vocabulaire structuré VoS.

Dans un deuxième cas de figure, si l'étiquette d'utilisateur EtU comprend une expression qui n'est pas incluse dans le vocabulaire structuré VoS, ou qui n'est pas proche sémantiquement du sens d'une autre expression incluse dans le vocabulaire structuré VoS, le module MET génère de nouvelles étiquettes de confidentialité EtC ayant des liens hiérarchiques entre elles et étant rattachées au vocabulaire structuré VoS. Dans ce cas, le module d'étiquette MET peut optionnellement suggérer les nouvelles étiquettes de confidentialité EtC à l'utilisateur afin que ce dernier les confirme.

A titre d'exemple, un vocabulaire structuré VoS d'une étiquette de la catégorie "évènement" comprend {"Evènement", "Evènement social", "Evènement social privé", "Fête"}. Dans le premier cas de figure, l'utilisateur renseigne une étiquette d'utilisateur EtU par l'expression "Fête", et le module MET identifie l'étiquette de confidentialité EtC comprenant cette expression dans le vocabulaire structuré VoS. Dans le deuxième cas de figure, l'utilisateur renseigne une étiquette d'utilisateur EtU par l'expression "Fête d'anniversaire de mon fils", et le module MET génère de nouvelles étiquettes de confidentialité EtC "Fête d'anniversaire" et "Fête d'anniversaire de mon fils" ayant des liens hiérarchiques et étant rattachées au vocabulaire structuré VoS de la façon suivante : {"Evènement", "Evènement social", "Evènement social privé", "Fête", "Fête d'anniversaire", "Fête d'anniversaire de mon fils"}.

A l'étape E3, un autre utilisateur, ayant une relation sociale avec l'utilisateur via le service de réseau social offert par le serveur d'application, souhaite consulter l'étiquette d'utilisateur EtU associé à l'objet multimédia ObM qui est en partage à travers le réseau de télécommunications RT.

Le module d'étiquette MET détermine la catégorie sociale de l'autre utilisateur par rapport à l'utilisateur en collaboration avec le module de relation MR, et sélectionne une étiquette de confidentialité EtC dans le vocabulaire structuré VoS relatif à l'étiquette d'utilisateur EtU, en fonction de la catégorie sociale déterminée. Par exemple, l'autre utilisateur est identifié au moyen d'un identificateur auquel est associée une catégorie sociale.

L'étape E3 peut être exécutée par exemple lorsque l'autre utilisateur est connecté à la page web dans laquelle sont affichés l'objet multimédia et l'étiquette d'utilisateur associé. Selon d'autres exemples, l'étape E3 peut être exécutée lorsque l'utilisateur sélectionne l'objet multimédia ou déplace un curseur dans une zone où est affiché l'objet multimédia. De manière générale, il sera considéré que l'étape E3 est exécutée lorsque ledit autre utilisateur accède à l'étiquette d'utilisateur EtU.

A l'étape E4, le module d'étiquette MET affiche l'étiquette de confidentialité EtC sélectionnée et rend accessible cette étiquette de confidentialité EtC à l'autre utilisateur en transmettant l'étiquette de confidentialité EtC à un terminal de communication de l'autre utilisateur. Ainsi, l'autre utilisateur peut lire une étiquette de confidentialité ayant par exemple moins de détails d'information que l'étiquette d'utilisateur EtU initialement mémorisée. Par ailleurs, l'étiquette de confidentialité EtC sélectionnée peut par exemple correspondre à l'étiquette d'utilisateur initialement mémorisée.

L'invention décrite ici concerne notamment un procédé et un serveur pour gérer des étiquettes associées à des objets multimédias. Selon une implémentation de l'invention, les étapes du procédé de l'invention sont déterminées par les instructions d'un programme d'ordinateur incorporé dans un serveur, tel que le serveur d'application SA. Le programme comporte des instructions de programme, qui lorsque ledit programme est chargé et exécuté dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour gérer au moins une étiquette d'utilisateur (EtU) qui est associée à un objet multimédia (ObM) détenu par un utilisateur et mémorisé dans un serveur d'application (SA), l'étiquette d'utilisateur (EtU) étant susceptible d'être accédée par au moins un autre utilisateur à travers un réseau de télécommunications (RT), le procédé comprenant les étapes suivantes dans le serveur d'application (SA) :
analyser (E2) sémantiquement le contenu d'une expression incluse dans l'étiquette d'utilisateur (EtU) pour déterminer un ensemble structuré (VoS) d'étiquettes de confidentialité (EtC),
lorsqu'un autre utilisateur accède à l'étiquette d'utilisateur (EtU), déterminer (E3) la catégorie sociale de l'autre utilisateur par rapport à l'utilisateur, et sélectionner (E3) une étiquette de confidentialité (EtC) dans l'ensemble structuré (VoS) relatif à l'étiquette d'utilisateur (EtU) en fonction de la catégorie sociale déterminée,
transmettre (E4) l'étiquette de confidentialité (EtC) sélectionnée à l'autre utilisateur.

2. Procédé conforme à la revendication 1, selon lequel l'ensemble structuré (VoS) d'étiquettes de confidentialité (EtC) est un vocabulaire structuré modélisant hiérarchiquement des relations entre les étiquettes de confidentialité (EtC).

3. Procédé conforme à la revendication 1 ou 2, selon lequel une expression comprise dans l'étiquette d'utilisateur (EtU) est incluse dans l'ensemble structuré (VoS) qui est préalablement mémorisé dans le serveur d'application (SA).

4. Procédé conforme à la revendication 1 ou 2, selon lequel une expression comprise dans l'étiquette d'utilisateur (EtU) n'est pas incluse dans un ensemble structuré qui est préalablement mémorisé dans le serveur d'application (SA), et de nouvelles étiquettes de confidentialité (EtC) ayant des liens hiérarchiques entre elles sont générées et rattachées au vocabulaire structuré (VoS).

5. Procédé conforme l'une des revendications 1 à 4, selon lequel l'étiquette de confidentialité (EtC) sélectionnée correspond à l'étiquette d'utilisateur (EtU).

6. Procédé conforme l'une des revendications 1 à 5, selon lequel la catégorie sociale de l'autre utilisateur par rapport à l'utilisateur est déterminée en fonction d'une relation sociale que possède l'utilisateur avec l'autre utilisateur et qui est définie par un service de réseau social géré par le serveur d'application (SA).

7. Serveur d'application (SA) pour gérer au moins une étiquette d'utilisateur (EtU) qui est associée à un objet multimédia (ObM) détenu par un utilisateur et mémorisé dans le serveur d'application (SA), l'étiquette d'utilisateur (EtU) étant susceptible d'être accédée par au moins un autre utilisateur à travers un réseau de télécommunications (RT), le serveur d'application (SA) comprenant :
des moyens (MET) pour analyser sémantiquement le contenu d'une expression incluse dans l'étiquette d'utilisateur (EtU) pour déterminer un ensemble structuré (VoS) d'étiquettes de confidentialité (EtC),
des moyens (MET) pour déterminer, lorsqu'un autre utilisateur accède à l'étiquette d'utilisateur (EtU), la catégorie sociale de l'autre utilisateur par rapport à l'utilisateur et des moyens (MET) pour sélectionner une étiquette de confidentialité (EtC) dans l'ensemble structuré (VoS) relatif à l'étiquette d'utilisateur (EtU) en fonction de la catégorie sociale déterminée,
des moyens (MET) pour transmettre l'étiquette de confidentialité (EtC) sélectionnée à l'autre utilisateur.

8. Programme d'ordinateur apte à être mis en oeuvre dans un serveur d'application (SA) pour gérer au moins une étiquette d'utilisateur (EtU) qui est associée à un objet multimédia (ObM) détenu par un utilisateur et mémorisé dans le serveur d'application (SA), l'étiquette d'utilisateur (EtU) étant susceptible d'être accédée par au moins un autre utilisateur à travers un réseau de télécommunications (RT), ledit programme comprenant des instructions qui, lorsque le programme est chargé et exécuté dans ledit serveur d'application (SA), réalisent les étapes suivantes :
analyser (E2) sémantiquement le contenu d'une expression incluse dans l'étiquette d'utilisateur (EtU) pour déterminer un ensemble structuré (VoS) d'étiquettes de confidentialité (EtC),
lorsqu'un autre utilisateur accède à l'étiquette d'utilisateur (EtU), déterminer (E3) la catégorie sociale de l'autre utilisateur par rapport à l'utilisateur, et sélectionner (E3) une étiquette de confidentialité (EtC) dans l'ensemble structuré (VoS) relatif à l'étiquette d'utilisateur (EtU) en fonction de la catégorie sociale déterminée,
transmettre (E4) l'étiquette de confidentialité (EtC) sélectionnée à l'autre utilisateur.

## Patentansprüche

1. Verfahren zum Generieren mindestens eines Benutzeretiketts (EtU), das einem Multimediaobjekt (ObM) im Besitz eines Benutzers zugeordnet und in einem Anwendungsserver (SA) gespeichert ist, wobei der Zugriff auf das Benutzeretikett (EtU) mindestens eines anderen Benutzers über ein Telekommunikationsnetz (RT) möglich ist, wobei das Verfahren die folgenden Schritte in dem Anwendungsserver (SA) umfasst:
semantisches Analysieren (E2) des Inhalts eines Ausdrucks in dem Benutzeretikett (EtU), um eine strukturierte Einheit (VoS) von Vertraulichkeitsetiketten (EtC) zu bestimmen,
wenn ein anderer Benutzer auf das Benutzeretikett (EtU) zugreift, Bestimmen (E3) der sozialen Kategorie des anderen Benutzers in Bezug auf den Benutzer und Auswählen (E3) eines Vertraulichkeitsetiketts (EtC) aus der strukturierten Einheit (VoS) relativ zu dem Benutzeretikett (EtU) in Abhängigkeit von der bestimmten sozialen Kategorie,
Übermitteln (E4) des ausgewählten Vertraulichkeitsetiketts (EtC) an den anderen Benutzer.

2. Verfahren nach Anspruch 1, wobei die strukturierte Einheit (VoS) von Vertraulichkeitsetiketten (EtC) ein strukturiertes Vokabular ist, das Beziehungen zwischen den Vertraulichkeitsetiketten (EtC) hierarchisch modelliert.

3. Verfahren nach Anspruch 1 oder 2, wobei ein Ausdruck, der in dem Benutzeretikett (EtU) inbegriffen ist, in der strukturierten Einheit (VoS) enthalten ist, die zuvor in dem Anwendungsserver (SA) gespeichert wurde.

4. Verfahren nach Anspruch 1 oder 2, wobei ein Ausdruck, der in dem Benutzeretikett (EtU) inbegriffen ist, nicht in der strukturierten Einheit enthalten ist, die zuvor in dem Anwendungsserver (SA) gespeichert wurde, und neue Vertraulichkeitsetiketten (EtC) mit hierarchischen Verbindungen untereinander generiert und dem strukturierten Vokabular (VoS) zugeordnet werden.

5. Verfahren nach einem der Ansprüche 1 bis 4, wobei das ausgewählte Vertraulichkeitsetikett (EtC) dem Benutzeretikett (EtU) entspricht.

6. Verfahren nach einem der Ansprüche 1 bis 5, wobei die soziale Kategorie des anderen Benutzers in Bezug auf den Benutzer in Abhängigkeit von einer sozialen Beziehung bestimmt wird, die der Benutzer mit dem anderen Benutzer besitzt und die von einem von dem Anwendungsserver (SA) generierten Sozialnetzwerkservice definiert ist.

7. Anwendungsserver (SA) zum Generieren mindestens eines Benutzeretiketts (EtU), das einem Multimediaobjekt (ObM) im Besitz eines Benutzers zugeordnet und in einem Anwendungsserver (SA) gespeichert ist, wobei der Zugriff auf das Benutzeretikett (EtU) von mindestens einem anderen Benutzer über ein Telekommunikationsnetz (RT) möglich ist, wobei der Anwendungsserver (SA) umfasst:
Mittel (MET), um den Inhalt eines Ausdrucks in dem Benutzeretikett (EtU) semantisch zu analysieren, um eine strukturierte Einheit (VoS) von Vertraulichkeitsetiketten (EtC) zu bestimmen,
Mittel (MET), um, wenn ein anderer Benutzer auf das Benutzeretikett (EtU) zugreift, die soziale Kategorie des anderen Benutzers in Bezug auf den Benutzer zu bestimmen, und Mittel (MET), um ein Vertraulichkeitsetikett (EtC) aus der strukturierten Einheit (VoS) relativ zu dem Benutzeretikett (EtU) in Abhängigkeit von der bestimmten sozialen Kategorie auszuwählen,
Mittel (MET), um das ausgewählte Vertraulichkeitsetikett (EtC) an den anderen Benutzer zu übertragen.

8. Rechnerprogramm, das imstande ist, in einem Anwendungsserver (SA) umgesetzt zu sein, um mindestens ein Benutzeretikett (EtU) zu generieren, das einem Multimediaobjekt (ObM) im Besitz eines Benutzers zugeordnet und in dem Anwendungsserver (SA) gespeichert ist, wobei der Zugriff auf das Benutzeretikett (EtU) von mindestens einem anderen Benutzer über ein Telekommunikationsnetz (RT) möglich ist, wobei das Programm Befehle umfasst, die, wenn das Programm geladen und in dem Anwendungsserver (SA) ausgeführt wird, die folgenden Schritte durchführt:
semantisches Analysieren (E2) des Inhalts eines Ausdrucks in dem Benutzeretikett (EtU), um eine strukturierte Einheit (VoS) von Vertraulichkeitsetiketten (EtC) zu bestimmen,
wenn ein anderer Benutzer auf das Benutzeretikett (EtU) zugreift, Bestimmen (E3) der sozialen Kategorie des anderen Benutzers in Bezug auf den Benutzer und Auswählen (E3) eines Vertraulichkeitsetiketts (EtC) aus der strukturierten Einheit (VoS) relativ zu dem Benutzeretikett (EtU) in Abhängigkeit von der bestimmten sozialen Kategorie,
Übermitteln (E4) des ausgewählten Vertraulichkeitsetiketts (EtC) an den andern Benutzer.

## Claims

1. A method for managing at least one user label (EtU) that is associated with a multimedia object (ObM) held by a user and saved in an application server (SA), the user label (EtU) being accessible to at least one other user over a telecommunications network (RT), the method comprising the following steps in the application server (SA):
semantically analyzing (E2) the contents of an expression included in the user label (EtU) to determine a structured set (VoS) of privacy labels (EtC),
whenever another user accesses the user label (EtU), determining (E3) the social category of another user with respect to the user, and selecting (E3) a privacy label (EtC) in the structured set (VoS) related to the user label (EtU) based on the determined social category,
sending the selected privacy label (EtC) to the other user.

2. A method according to claim 1, whereby the structured set (VoS) of privacy labels (EtC) is a structured vocabulary hierarchically modeling relationships between the privacy labels (EtC).

3. A method according to claim 1 or 2, whereby an expression comprised within the user label (EtU) is included in the structured set (VoS) that had previously been measured in the application server (SA).

4. A method according to claim 1 or 2, whereby an expressed comprised within the user label (EtU) is not included in a structured set that had previously been saved in the application server (SA), and new privacy labels (EtC) with hierarchical links between themselves are generated and assigned to the structured vocabulary (VoS).

5. A method according to one of the claims 1 to 4, whereby the selected privacy label (EtC) corresponds to the user label (EtU).

6. A method according to one of the claims 1 to 5, whereby the social category of the other user with respect to the user is determined based on a social relationship that the user has with the other user and which is defined by a social networking service managed by the application server (SA).

7. An application server for managing at least one user label (EtU) that is associated with a multimedia object (ObM) held by a user and saved in the application server (SA), the user label (EtU) being accessible to at least one other user over a telecommunications network (RT), the application server (SA) comprising:
means (MET) for semantically analyzing the contents of an expression included in the user label (EtU) to determine a structured set (VoS) of privacy labels (EtC),
means (MET) for determining, whenever another user accesses the user label (EtU), the social category of another user with respect to the user, and means (MET) for selecting a privacy label (EtC) in the structured set (VoS) related to the user label (EtU) based on the determined social category,
means (MET) for sending the selected privacy label (EtC) to the other user.

8. A computer program able to be implemented in an application server (SA) to manage at least one user label (EtU) that is associated with a multimedia object (ObM) held by a user and saved in the application server (SA), the user label (EtU) being accessible to at least one other user over a telecommunications network (RT), said program comprising instructions that, when the program is loaded and executed in said application server (SA), carry out the following steps:
semantically analyzing (E2) the contents of an expression included in the user label (EtU) to determine a structured set (VoS) of privacy labels (EtC),
whenever another user accesses the user label (EtU), determining (E3) the social category of another user with respect to the user, and selecting (E3) a privacy label (EtC) in the structured set (VoS) related to the user label (EtU) based on the determined social category,
sending the selected privacy label (EtC) to the other user.
